# EUROPÄISCHE PATENTSCHRIFT

(11) **EP 2 006 592 B1**
(45) Veröffentlichungstag und Bekanntmachung des Hinweises auf die Patenterteilung: **30.12.2009**
(21) Anmeldenummer: 08006974.3
(22) Anmeldetag: 08.04.2008
(51) Int. Cl.: F16L 37/113, F16L 37/252

(54) **Kupplung**
Coupling
Raccord

(30) Priorität: 18.06.2007 DE 202007008491 U
(43) Veröffentlichungstag der Anmeldung: 24.12.2008
(73) Patentinhaber: MAT Mischanlagentechnik GmbH, 87509 Immenstadt-Seifen (DE)
(72) Erfinder: Kleimeier, Manfred, 87527 Sonthofen (DE); Machaczek, Alexander, 87437 Kempten (DE)
(74) Vertreter: Wunderlich, Rainer

(56) Entgegenhaltungen:
- WO-A-93/02313
- DE-A1- 2 146 593
- US-A- 2 286 263
- US-A- 3 180 660
- US-A- 5 421 036

## Beschreibung

Die Erfindung betrifft eine Kupplung zum Verbinden von Rohr- oder Schlauchleitungen mit einem ersten Kupplungselement und einem zweiten Kupplungselement, welche miteinander koppelbar sind.

Eine bekannte Kupplung dieser Art weist zwei gleiche Kupplungselemente auf, die durch Verdrehen gegeneinander verbunden werden können. Hierzu greift ein Vorsprung des ersten Kupplungselements in eine teilkreisförmig ausgebildete Hinterschneidung des zweiten Kupplungselements und umgekehrt ein Vorsprung des zweiten Kupplungselements in eine teilkreisförmig ausgebildete Hinterschneidung des ersten Kupplungselements ein. Durch die Hinterschneidungen ist eine derartige Kupplung verschmutzungsempfindlich.

Bekannte, so genannte Mörtelschlauch-Kupplungen weisen durch ihre axiale Hebelanordnung jeweils große Baulängen auf. Mörtelschlauch-Kupplungen sind zudem durch ihre massive Ausführung besonders schwer.

Aus der gattungsbildenden US 5,423,036 ist eine Vorrichtung zum Befestigen von Installationsgeräten bekannt. Die Vorrichtung weist einen längenverstellbaren Befestigungsbolzen auf.

US 3,180,660 offenbart eine weitere Vorrichtung zum Befestigen von Installationsgeräten. Die Vorrichtung weist eine Ankereinrichtung mit einer Basis, einem rohrförmigen Bereich und einem Kopf auf. In den Kopf ist eine kegelförmige Schraube eingelassen, die in den rohrförmigen Bereich eingeschraubt werden kann.

Aus der WO 93/02313 geht eine Rohrverbindung für zwei Rohrenden hervor, wobei ein erstes Rohrende buchsenförmig zur Aufnahme eines zweiten Rohrendes ausgebildet ist. Zwei ringförmig an den beiden Rohrenden ausgebildete Flansche können über einen Bajonettverschluss mit Arretierstiften und entsprechenden schlüssellochartigen Löchern miteinander verbunden werden.

DE 2 146 593 beschreibt eine verdrehbare Flanschverbindung zweier fluchtender Rohre mit zwei mit den beiden Rohren fest verbundenen Flanschen und einem losen, ringförmigen Gegenflansch. Der Gegenflansch weist an seinem inneren Umfang mehrere Vorsprünge auf, die in entsprechende Ausnehmengen am äußeren Umfang des mit der angrenzenden Rohrleitung verbundenen Flansches passen. Die axiale Sicherung erfolgt mittels mehrerer Schrauben.

Der Erfindung liegt die **Aufgabe** zugrunde, eine Kupplung zum Verbinden von Rohr- oder Schlauchleitungen anzugeben, die einfach zu bedienen und robust aufgebaut ist.

Die Aufgabe wird durch die Merkmale des Anspruchs 1 gelöst.

Die erfindungsgemäße Kupplung ist einfach, kompakt und robust aufgebaut. Sie ist wartungsarm sowie leicht und sicher zu bedienen.

Durch die Anordnung von mehreren Verriegelungsbolzen auf dem Kupplungsflansch weist die Kupplung nur geringe Hinterschneidungsbereiche auf, die der axialen Fixierung des zweiten Kupplungselements dienen. Hinterschneidungsbereiche sind dabei insbesondere in den Stützbereichen der Verriegelungsbolzen zu sehen. Diese sind derart freiliegend angeordnet, dass sich Schmutz kaum anlagern kann. Die erfindungsgemäße Kupplung ist daher besonders unempfindlich gegen Verschmutzung, selbst bei abbindenden Medien, wie beispielsweise Zement.

Die erfindungsgemäße Kupplung kann besonders einfach und schnell geschlossen beziehungsweise geöffnet werden. Hierdurch ist eine schnell lösbare Verbindung von Rohr- oder Schlauchleitungen gegeben. Zum Schließen oder Lösen der Kupplung wird das Riegelelement durch Verdrehung um eine Längsachse von einer Öffnungsstellung in eine Schließstellung beziehungsweise von einer Schließstellung in eine Öffnungsstellung gebracht. Durch die Anordnung von mindestens zwei Riegelbereichen wird dabei das Riegelelement um weniger als 180° gedreht.

Bevorzugt weist die Kupplung drei, vier oder sechs Verriegelungsbolzen auf. Entsprechend der Anzahl und Anordnung der Verriegelungsbolzen sind an dem Riegelelement eine Mehrzahl von Riegelbereichen angeordnet. Der Drehwinkel des Riegelelements zwischen Öffnungsstellung und Schließstellung verringert sich daher mit Zunahme der Anzahl der Verriegelungsbolzen. Bei drei, vier oder sechs Verriegelungsbolzen ergibt sich somit ein Drehwinkel von jeweils weniger als 120°, 90° beziehungsweise 60°.

Die Kupplung wird durch eine Verdrehung des Riegelelements in einer Umfangsrichtung geschlossen beziehungsweise geöffnet. Hierdurch weist die erfindungsgemäße Kupplung eine besonders geringe Baulänge auf. Durch eine geringe axiale Ausdehnung der Kupplung ist auch ein Kupplungsweg, insbesondere in axialer Richtung, kurz. Die Kupplung erlaubt zudem einen lageunabhängigen Einsatz. Insbesondere kann die Kupplung sowohl in vertikaler als auch in horizontaler Anordnung betrieben werden.

Die Kupplung kann derart ausgestaltet sein, dass sie keine losen Teile, wie beispielsweise Schrauben, Muttern, Stifte oder lose Dichtungsringe, aufweist. Insgesamt ergibt sich somit eine besonders robuste Bauweise der erfindungsgemäßen Kupplung.

Eine vorteilhaftes Schließverhalten der Kupplung wird dadurch erreicht, dass der Sperrbereich und der Stützbereich der Verriegelungsbolzen axial voneinander beabstandet sind und dass zwischen Sperrbereich und Stützbereich ein zwischen diesen vermittelnder schräger Übergangsbereich angeordnet ist. Durch den schrägen Übergangsbereich wird bewirkt, dass durch Verdrehen des Regelelements von einer Öffnungsstellung in eine Schließstellung das Riegelelement axial in Richtung des ersten Kupplungselements geführt und somit erstes und zweites Kupplungselement gegeneinander gepresst werden. Der Übergangsbereich ist eine Fläche, deren eines Ende an den Sperrbereich und deren anderes Ende an den Stützbereich des Verriegelungsbolzens angrenzt.

In einer Weiterbildung der Erfindung ist vorgesehen, dass an dem ersten Kupplungselement, insbesondere an dessen Kupplungsflansch, und an dem zweiten Kupplungselement, insbesondere an dessen Kupplungsstutzen, jeweils Dichtflächen angeordnet sind, welche zueinander passend ausgebildet sind, und dass zwischen den Dichtflächen mindestens ein Dichtungselement angeordnet ist. Durch die Anordnung von Dichtflächen mit einem Dichtungselement, etwa einem Dichtring, kann eine fluiddichte Verbindung zwischen erstem und zweitem Kupplungselement erreicht werden.

Besonders bevorzugt ist es, dass die Dichtflächen kegelförmig ausgebildet sind und einen Innenkegel beziehungsweise einen Außenkegel bilden. Diese zueinander passenden Kegel erlauben eine gute Positionierung der Dichtflächen zueinander und ermöglichen somit eine besonders gute Abdichtung. Die Kupplung ist insbesondere sowohl für Druck- als auch für Saugleitungen geeignet. Die kegelförmigen Dichtflächen können zudem als Zentrierhilfen beim Schließen der Kupplung dienen.

Eine erfindungsgemäße Weiterentwicklung der Kupplung besteht darin, dass der Sperrabschnitt mindestens eines Riegelbereichs und der Stützbereich mindestens eines Verriegelungsbolzens kraftschlüssig, insbesondere durch eine Klemmverbindung, miteinander verbindbar sind. Durch die kraftschlüssige Verbindung kann das Riegelelement sicher in seiner Schließstellung gehalten werden. Im Vergleich zu beispielsweise einer formschlüssigen Verbindung ist die kraftschlüssige Verbindung besonders unempfindlich gegen Verschmutzungen und kann konstruktiv einfach hergestellt werden. Zur Realisierung der kraftschlüssigen Verbindung ist der Abstand des Sperrabschnitts von der Längsachse geringfügig größer als der Abstand des Stützbereichs von der Längsachse. Das Riegelelement wird somit radial gegen die Verriegelungsbolzen geklemmt, wobei eine Presspassung gebildet ist.

Ein besonders komfortables Öffnen und Schließen der Kupplung kann dadurch erreicht werden, dass der Öffnungsabschnitt jedes Riegelbereichs kontinuierlich in den Sperrabschnitt übergeht. Hierunter ist insbesondere zu verstehen, dass sich der Abstand des Öffnungsabschnitts von der Längsachse kontinuierlich bis zum Abstand des Sperrabschnitts von der Längsachse vergrößert beziehungsweise sich der Abstand des Sperrabschnitts von der Längsachse kontinuierlich bis zum Abstand des Öffnungsabschnitts von der Längsachse verkleinert. Diese Ausführungsform ist besonders vorteilhaft in Verbindung mit dem zwischen Sperrbereich und Stützbereich angeordneten Übergangsbereich. Wird das Riegelelement durch Verdrehen um die Längsachse von einer Öffnungsstellung in eine Schließstellung überführt, so bewirkt der kontinuierlich in den Sperrabschnitt übergehende Öffnungsabschnitt in Verbindung mit dem schrägen Übergangsbereich, dass das Riegelelement kontinuierlich in Richtung des ersten Kupplungselements geführt und an dieses angedrückt wird.

Der kontinuierlich in den Sperrabschnitt übergehende Öffnungsabschnitt entfaltet des Weiteren eine vorteilhafte Wirkung in Verbindung mit der kraftschlüssigen Verbindung des Sperrabschnitts mit dem Stützbereich. Durch die kontinuierliche Zunahme des Abstands des Sperrabschnitts von der Längsachse nimmt eine Klemmkraft zwischen Sperrabschnitt und Stützbereich kontinuierlich zu. Besonders bevorzugt ist es, wenn der Abstand des Sperrabschnitts von der Längsachse mit einer geringen Steigung zunimmt, so dass eine gute Klemmwirkung zwischen Sperrabschnitt und Stützbereich erzielt wird. Eine besonders gute Klemmwirkung kann erfindungsgemäß dadurch erreicht werden, dass der Öffnungsabschnitt kontinuierlich zunächst mit größerer Steigung und schließlich mit geringerer Steigung in den Sperrabschnitt übergeht. Hierdurch steht ein möglichst langer Weg für die Erzeugung einer Klemmung zur Verfügung.

Eine vorteilhafte Ausgestaltung der Verriegelungsbolzen besteht darin, dass zumindest ein Verriegelungsbolzen eine Hülse aufweist, an welcher der Sperrbereich, der Stützbereich und/oder der Übergangsbereich ausgebildet ist, und dass die Hülse mit einem Schraubbolzen am Kupplungsflansch befestigt ist. Die Verwendung einer Hülse bietet den Vorteil, dass nur diese, und nicht der gesamte Verriegelungsbolzen, aus einem für den Kraftschluss vorteilhaften Material gebildet sein muss. Zudem kann bei einer Abnutzung die Hülse in einfacher Weise ersetzt werden. Die Hülse bietet zudem den Vorteil, die Kupplungseigenschaften durch gezielte Ausgestaltung der Hülse zu beeinflussen. So kann diese derart gelagert sein, dass sie auf dem Schraubbolzen drehbar ist. Zwischen Schraubbolzen und Hülse kann ein Zwischenraum vorgesehen sein oder die Hülse kann aus einem elastischen Material gebildet sein, so dass eine gewisse Verformbarkeit gegeben ist. Hierdurch kann eine verbesserte kraftschlüssige Verbindung zwischen Riegelelement und Verriegelungsbolzen erreicht werden.

Zur Befestigung der Hülse an dem Kupplungsflansch ist insbesondere vorgesehen, dass der Kupplungsflansch Öffnungen, insbesondere Durchgangsöffnungen, aufweist, auf deren Kante die Hülse aufsetzbar ist. Mittels eines Schraubbolzens kann die Hülse an den Kupplungsflansch angeschraubt werden.

Eine Verbesserung der Klemmung zwischen Verriegelungsbolzen und Riegelelement wird dadurch erreicht, dass die Verriegelungsbolzen, insbesondere dessen Sperrbereiche, Stützbereiche und Übergangsbereiche, und das Riegelelement aus einer gleitfähigen Materialpaarung gebildet sind.

Gemäß einer Weiterbildung der Erfindung ist vorgesehen, dass an dem Riegelelement zwischen den Riegelbereichen jeweils ein Vorsprung angeordnet ist, der in der Öffnungsstellung und/oder Schließstellung des Riegelelements als Anschlag an die Verriegelungsbolzen dient. Diese Anschläge haben den besonderen Vorteil, dass ein Anwender der Kupplung die Öffnungsstellung und die Schließstellung leicht erkennen kann. Im Hinblick auf die Schließstellung ist der Anschlag insofern von großer Bedeutung, dass ein Anwender erkennt, ob das Riegelelement hinreichend weit gedreht wurde, um eine feste Verbindung zwischen den beiden Kupplungselementen sicherzustellen.

Eine besonders komfortable Anwendung der Kupplung ergibt sich dadurch, dass zumindest ein Vorsprung als hebelartiges Griffelement ausgebildet ist. Hierdurch kann die Kupplung insbesondere auch per Hand ohne Zuhilfenahme eines Werkzeugs betätigt werden.

Gemäß einer besonders bevorzugten Ausführungsform der Erfindung ist vorgesehen, dass der Kupplungsflansch gemäß einem genormten Lochbild, insbesondere nach DIN oder nach ANSI, Durchgangsöffnungen aufweist, dass die Verriegelungsbolzen in den Durchgangsöffnungen angeordnet sind, und dass der Kupplungsflansch mittels der Verriegelungsbolzen an einem Rohr- oder Schlauchflansch befestigt werden kann. Gemäß dieser Ausführungsform erfüllen die Verriegelungsbolzen somit zwei Funktionen. Sie dienen zum einen der erfindungsgemäßen Kupplung mit dem Riegelelement des zweiten Kupplungselements und zum anderen der Verbindung des Kupplungsflansches an einem rohr- oder schlauchseitig angeordneten Verbindungsflansch. Die Verriegelungsbolzen sind bevorzugt in den Durchgangsöffnungen des Kupplungsflansches und in Bohrungen des Rohr- oder Schlauchflansches angeordnet, die hierzu ein gleiches Lochbild aufweisen müssen. Unter Lochbild wird insbesondere Durchmesser, Anzahl und Anordnung der Bohrungen beziehungsweise Öffnungen auf einem Flansch verstanden.

Eine weitere erfindungsgemäße Ausgestaltung ist dadurch gegeben, dass der Kupplungsflansch einen Gewindeanschluss aufweist. Hierzu kann beispielsweise ein mit einem Gewinde versehenes zylinderförmiges Anschlusselement vorgesehen sein, welches an dem Kupplungsflansch befestigt, insbesondere angeschweißt ist. Der Gewindeanschluss weist vorzugsweise ein Innengewinde auf, in welches ein Rohr- oder ein Schlauchende mit einem entsprechenden Außengewinde eingeschraubt werden kann. Hierdurch lässt sich eine einfache und feste Verbindung des Kupplungsflansches mit einem Rohr- oder Schlauchende realisieren.

Zum Anschließen des zweiten Kupplungselements ist es bevorzugt, dass an dem Kupplungsstutzen ein Gewinde vorgesehen ist. Entsprechend dem Anschluss des Kupplungsflansches an ein Rohr- oder Schlauchende kann so auch der Kupplungsstutzen mit einem Rohr- oder Schlauchende verschraubt werden. Das Gewinde ist bevorzugt als Innengewinde ausgebildet und erstreckt sich im Wesentlichen über die axiale Länge des Kupplungsstutzens.

Die Erfindung wird weiter anhand von bevorzugten Ausführungsbeispielen, welche in den beiliegenden schematischen Zeichnungen dargestellt sind, beschrieben. Es zeigen:
Figur 1 eine axiale Aufsicht auf eine erfindungsgemäße Kupplung;
Figur 2 eine Querschnittsansicht einer erfindungsgemäßen Kupplung in einer Schließstellung; und
Figur 3 eine Querschnittsansicht einer erfindungsgemäßen Kupplung in einer Öffnungsstellung.

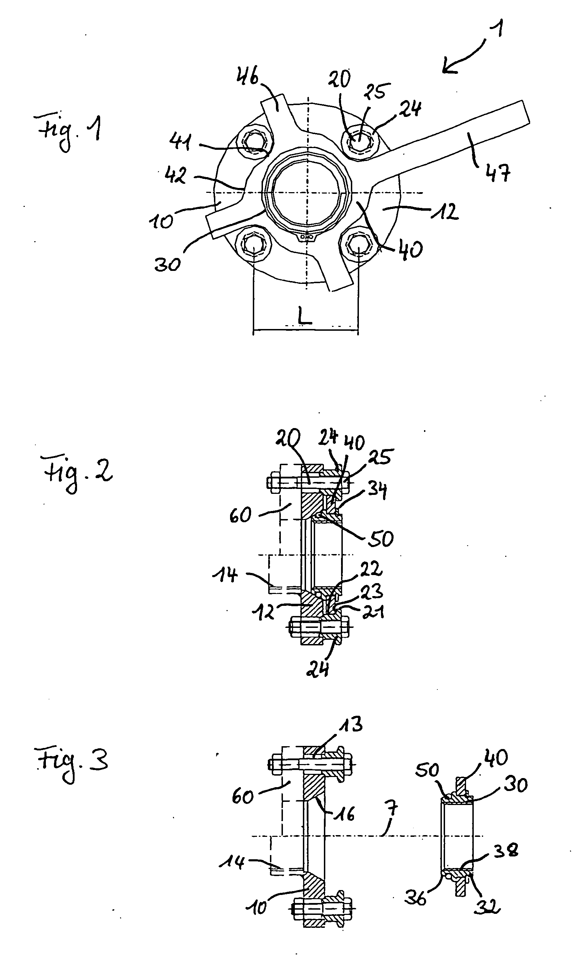

Fig. 1 zeigt in einer schematischen Darstellung eine erfindungsgemäße Kupplung 1 mit einem ersten Kupplungselement 10 und einem zweiten Kupplungselement 30. An das erste Kupplungselement 10 und das zweite Kupplungselement 30 ist jeweils eine Rohr- oder Schlauchleitung anschließbar. Die beiden Kupplungselemente 10 und 30 sind derart miteinander koppelbar, dass eine fluiddichte Verbindung der Rohr- oder Schlauchleitungen erzielbar ist.

Das erste Kupplungselement 10 weist einen Kupplungsflansch 12 auf, an dessen Stirnfläche vier Verriegelungsbolzen 20 gleichmäßig voneinander beabstandet gemäß einem genormten Lochbild angeordnet sind. Die Verriegelungsbolzen 20 stehen senkrecht von der Stirnfläche des Kupplungsflansches 12 in Richtung des zweiten Kupplungselements 30 hervor.

Das zweite Kupplungselement 30 weist einen Kupplungsstutzen 32 auf, welcher auch als Verriegelungskonus bezeichnet werden kann. An diesem ist ein Riegelelement 40 drehbar um eine Längsachse 7 der Kupplung 1 gelagert. Das Riegelelement 40 weist vier Riegelbereiche auf, zwischen denen jeweils ein Vorsprung 46 gebildet ist. Einer der Vorsprünge 46 ist länger als die drei weiteren Vorsprünge 46 und als Griffelement 47 gestaltet.

Jeder Riegelbereich hat eine teilspiralförmige Kante oder Umfangsfläche, deren Abstand von der Längsachse 7 im Uhrzeigersinn kontinuierlich abnimmt. Öffnungsabschnitte 41 der Riegelbereiche haben einen Abstand von der Längsachse 7, der derart bemessen ist, dass das Riegelelement 40 an einem nach innen vorstehenden Bereich der Verriegelungsbolzen 20, welcher als Sperrbereich 21 bezeichnet wird, axial vorbeigeführt werden kann. Sperrabschnitte 42 der Riegelbereiche haben einen Abstand von der Längsachse 7, der derart bemessen ist, dass das Riegelelement 40 hinter den Sperrbereichen 21 der Verriegelungsbolzen 20 festlegbar ist. Dabei liegen die als Sperrabschnitte 42 bezeichneten Umfangsflächen der Riegelbereiche an einer als Stützbereich 22 bezeichneten Fläche der Verriegelungsbolzen 20 an.

Fig. 2 zeigt die Kupplung in einer Querschnittsdarstellung. Der Kupplungsflansch 12 weist Durchgangsöffnungen 13 auf, die gemäß einem genormten Lochbild angeordnet sind. Zwei benachbarte Durchgangsöffnungen haben mit Bezug auf Fig. 1 jeweils einen mit L bezeichneten Abstand voneinander. Auf den Durchgangsöffnungen 13 ist jeweils eine Hülse 24 aufgesetzt, deren Innendurchmesser kleiner und deren Außendurchmesser größer ist als der Lochdurchmesser der Durchgangsöffnung 13. Die Hülse 24 ist mittels eines Schraubbolzens 25 und einer Mutter an dem Kupplungsflansch 12 befestigt. In axialer Richtung weist die Hülse 24 zwei Sektionen auf. In einer ersten Sektion, welche sich an den Kupplungsflansch 12 anschließt, weist die Hülse 24 einen Außendurchmesser auf, der kleiner ist als der Außendurchmesser einer zweiten Sektion, die von dem Kupplungsflansch 12 beabstandet ist. Zwischen der ersten und zweiten Sektion ist ein Übergangsbereich 23 als kegelförmige Schräge mit einem zunehmenden Außendurchmesser gebildet. An der ersten Sektion ist radial innen liegend der Stützbereich 22 und an der zweiten Sektion radial innen liegend der Sperrbereich 21 ausgebildet.

Am Kupplungsflansch 12 ist eine als Innenkegel 16 ausgebildete erste Dichtfläche vorgesehen, welche auch als Dichtkonus bezeichnet werden kann. Diese ist passend zu einer am Kupplungsstutzen 32 ausgebildeten zweiten Dichtfläche, welche auch als Dichtkegel bezeichnet werden kann. In der als Außenkegel 36 gestalteten zweiten Dichtfläche ist eine ringförmige erste Nut angeordnet. In dieser ist ein als O-Ring ausgebildetes ringförmiges Dichtungselement 50 aufgenommen, das in geöffnetem Zustand der Kupplung 1 minimal von der zweiten Dichtfläche hervorsteht.

Das Riegelelement 40 ist an dem Kupplungsstutzen 32 axial fixiert. Die axiale Fixierung ist mittels einer an dem Kupplungsstutzen 32 ausgebildeten Schulter und eines Sicherungsringes 34 realisiert. Die Schulter ist auf der dem ersten Kupplungselement 10 zugewandten Seite in unmittelbarer Nähe zu der zweiten Dichtfläche angeordnet.
Der Sicherungsring 34 ist in einer zweiten Nut aufgenommen.

Zum Schließen der Kupplung wird das zweite Kupplungselement 30 axial auf das erste Kupplungselement 10 aufgesetzt, wobei die Öffnungsabschnitte 41 des Riegelelements 40 innen an den Verriegelungsbolzen 20 vorbeigeführt werden. Das Riegelelement 40 wird sodann durch eine Verdrehung in eine Stellung gebracht, in der die Sperrabschnitte 42 hinter den Sperrbereichen 21 der Verriegelungsbolzen 20 liegen und gegen die Stützbereiche 22 geklemmt sind. Dabei bewegt sich die teilspiralförmige Umfangsfläche oder Kante des Riegelelements 40 unter bzw. hinter die Schräge des Verriegelungsbolzens 20, wobei die kegelförmige Schräge des Übergangsbereichs 23 gegen das Riegelelement 40 drückt und so der Außenkegel 36 gegen den Innenkegel 16 gepresst wird.

Zum Anschluss des ersten Kupplungselements 10 an eine Rohr- oder Schlauchleitung sind in den Figuren 2 und 3 zwei alternative Anschlussmöglichkeiten gezeigt. Unterhalb der Längsachse 7 ist ein Anschluss mittels eines Gewindeflansches gezeigt. Dieser weist einen Gewindeanschluss 14 mit einem Innengewinde auf, an den eine Rohr- oder Schlauchleitung mit einem Außengewinde angeschlossen werden kann. Der Gewindeanschluss 14 ist an den Kupplungsflansch 12 angeschweißt. Oberhalb der Längsachse 7 ist eine Anschlussmöglichkeit gezeigt, bei der der Kupplungsflansch 12 direkt an einen Rohr- oder Schlauchflansch 60 angeschlossen ist. Hierzu werden Rohr- oder Schlauchflansch 60, Kupplungsflansch 12 und Hülse 24 durch eine Schraubverbindung, insbesondere mehrere Schraubbolzen 25, axial miteinander verbunden. In der gezeigten Ausführungsform sind vier Schraubbolzen 25 vorgesehen. Kupplungsflansch 12 und Rohr- oder Schlauchflansch 60 weisen ein gleiches Lochbild auf.

Zum Anschluss des zweiten Kupplungselements 30 an eine Rohr- oder Schlauchleitung ist an dem Kupplungsstutzen 32 ein Gewinde 38, welches als Innengewinde ausgebildet ist, vorgesehen. Das Gewinde erstreckt sich im Wesentlichen über die gesamte axiale Länge des Kupplungsstutzens 32 und ist somit radial innenliegend zu dem Außenkegel 36, dem Dichtungselement 50 und dem Riegelelement 40 angeordnet. Hierdurch ergibt sich eine besonders kompakte Bauweise des zweiten Kupplungselements 30.

In Fig. 3 ist eine erfindungsgemäße Kupplung 1 in geöffneter oder gelöster Stellung gezeigt. Ausgehend von der in Fig. 2 gezeigten Schließstellung wurde hierzu das Riegelelement 40 um einen Winkel kleiner als 45° gegen den Uhrzeigersinn verdreht und das zweite Kupplungselement 30 mit dem Riegelelement 40 axial von dem ersten Kupplungselement 10 entfernt.

## Patentansprüche

1. Kupplung zum Verbinden von Rohr- oder Schlauchleitungen mit einem ersten Kupplungselement (10) und einem zweiten Kupplungselement (30), welche miteinander koppelbar sind,
wobei
an dem ersten Kupplungselement (10) verteilt auf einem Kupplungsflansch (12) eine Mehrzahl von Verriegelungsbolzen (20) angeordnet sind, die sich im Wesentlichen parallel zu einer Längsachse (7) der Kupplung (1) erstrecken,
die Verriegelungsbolzen (20) jeweils einen vom Kupplungsflansch (12) axial beabstandeten Sperrbereich (21) mit einem kleineren Abstand von der Längsachse (7) und einen Stützbereich (22) aufweisen, welcher einen größeren Abstand von der Längsachse (7) hat,
an dem zweiten Kupplungselement (30) ein Riegelelement (40) angeordnet ist, das entsprechend den Verriegelungsbolzen (20) eine Mehrzahl von Riegelbereichen aufweist,
jeder Riegelbereich zwei Abschnitte aufweist, wobei ein Öffnungsabschnitt (41) einen kleineren Abstand von der Längsachse (7) aufweist als der Sperrbereich (21) des entsprechenden Verriegelungsbolzens (20) und ein Sperrabschnitt (42) einen größeren Abstand von der Längsachse (7) aufweist als der Sperrbereich (21) des entsprechenden Verriegelungsbolzens (20),
in einer Öffnungsstellung das Riegelelement (40) axial auf das erste Kupplungselement (10) aufsetzbar und durch eine Verdrehung um die Längsachse (7) in eine Schließstellung überführbar ist und
in der Schließstellung der Sperrabschnitt (42) zumindest eines Riegelbereichs zwischen dem Sperrbereich (21) des entsprechenden Verriegelungsbolzens (20) und dem Kupplungsflansch (12) liegt,
**dadurch gekennzeichnet,**
**dass** jeder Riegelbereich des Riegelelements (40) eine teilspiralförmige Kante oder Umfangfläche aufweist und
**dass** in der Schließstellung das Riegelelement (40) mit den Sperrabschnitten (42) radial gegen die Verriegelungsbolzen (20) geklemmt ist, wobei eine Presspassung gebildet ist.

2. Kupplung nach Anspruch 1,
**dadurch gekennzeichnet,**
**dass** der Sperrbereich (21) und der Stützbereich (22) der Verriegelungsbolzen (20) axial voneinander beabstandet sind und
**dass** zwischen Sperrbereich (21) und Stützbereich (22) ein zwischen diesen vermittelnder schräger Übergangsbereich (23) angeordnet ist.

3. Kupplung nach Anspruch 1 oder 2,
**dadurch gekennzeichnet,**
**dass** an dem ersten Kupplungselement (10), insbesondere an dessen Kupplungsflansch (12), und an dem zweiten Kupplungselement (30), insbesondere an dessen Kupplungsstutzen (32), jeweils Dichtflächen angeordnet sind, welche zueinander passend ausgebildet sind, und
**dass** zwischen den Dichtflächen vorzugsweise mindestens ein Dichtungselement (50) angeordnet ist.

4. Kupplung nach Anspruch 3,
**dadurch gekennzeichnet,**
**dass** die Dichtflächen kegelförmig ausgebildet sind und einen Innenkegel (16) bzw. einen Außenkegel (36) bilden.

5. Kupplung nach einem der Ansprüche 1 bis 4,
**dadurch gekennzeichnet,**
**dass** in der Schließstellung der Sperrabschnitt (42) mindestens eines Riegelbereichs und der Stützbereich (22) mindestens eines Verriegelungsbolzens (20) kraftschlüssig, insbesondere durch eine Klemmverbindung, miteinander verbunden sind.

6. Kupplung nach einem der Ansprüche 1 bis 5,
**dadurch gekennzeichnet,**
**dass** der Öffnungsabschnitt (41) jedes Riegelbereichs kontinuierlich in den Sperrabschnitt (42) übergeht.

7. Kupplung nach einem der Ansprüche 1 bis 6,
**dadurch gekennzeichnet,**
**dass** zumindest ein Verriegelungsbolzen (20) eine Hülse (24) aufweist, an welcher der Sperrbereich (21), der Stützbereich (22) und/oder der Übergangsbereich (23) ausgebildet ist, und
**dass** die Hülse (24) mit einem Schraubbolzen (25) am Kupplungsflansch (12) befestigt ist.

8. Kupplung nach einem der Ansprüche 1 bis 7,
**dadurch gekennzeichnet,**
**dass** die Verriegelungsbolzen (20), insbesondere dessen Sperrbereiche (21), Stützbereiche (22) und Übergangsbereiche (23), und das Riegelelement (40) aus einer gleitfähigen Materialpaarung gebildet sind.

9. Kupplung nach einem der Ansprüche 1 bis 8,
**dadurch gekennzeichnet,**
**dass** an dem Riegelelement (40) zwischen den Riegelbereichen jeweils ein Vorsprung (46) angeordnet ist, der in der Öffnungsstellung und/oder Schließstellung des Riegelelements (40) als Anschlag an die Verriegelungsbolzen (20) dient.

10. Kupplung nach Anspruch 9,
**dadurch gekennzeichnet,**
**dass** zumindest ein Vorsprung (46) als hebelartiges Griffelement (47) ausgebildet ist.

11. Kupplung nach einem der Ansprüche 1 bis 10,
**dadurch gekennzeichnet,**
**dass** der Kupplungsflansch (12) gemäß einem genormten Lochbild, insbesondere nach DIN oder ANSI, Durchgangsöffnungen (13) aufweist,
**dass** die Verriegelungsbolzen (20) in den Durchgangsöffnungen (13) angeordnet sind, und
**dass** der Kupplungsflansch (12) mittels der Verriegelungsbolzen (20) an einem Rohr- oder Schlauchflansch (60) befestigt werden kann.

12. Kupplung nach einem der Ansprüche 1 bis 10,
**dadurch gekennzeichnet,**
**dass** der Kupplungsflansch (12) einen Gewindeanschluss (14) aufweist.

13. Kupplung nach einem der Ansprüche 1 bis 12,
**dadurch gekennzeichnet,**
**dass** an dem Kupplungsstutzen (32) ein Gewinde (38) vorgesehen ist.

## Claims

1. Coupling for connecting pipelines or hose lines comprising a first coupling element (10) and a second coupling element (30) which can be coupled with each other, whereby
on the first coupling element (10) a plurality of locking bolts (20) are arranged in a distributed manner on a coupling flange (12) and extend substantially parallel to a longitudinal axis (7) of the coupling (1),
the locking bolts (20) each have a blocking portion (21), which is axially spaced from the coupling flange (12) and has a smaller distance to the longitudinal axis (7), and a supporting portion (22), which has a larger distance to the longitudinal axis (7),
on the second coupling element (30) a lock element (40) is arranged, which has a plurality of lock portions corresponding to the locking bolts (20),
each lock portion has two sections, whereby an opening section (41) has a smaller distance to the longitudinal axis (7) than the blocking portion (21) of the corresponding locking bolt (20) and a blocking section (42) has a larger distance to the longitudinal axis (7) than the blocking portion (21) of the corresponding locking bolt (20),
in an open position the lock element (40) can be placed axially onto the first coupling element (10) and, by twisting about the longitudinal axis (7), it can be moved into a closed position and
in the closed position the blocking section (42) of at least one lock portion lies between the blocking portion (21) of the corresponding locking bolt (20) and the coupling flange (12),
**characterized in that**
each lock portion of the lock element (40) has a partially spiral-shaped edge or circumferential surface and
**in that** in the closed position the lock element (40) is clamped with the blocking sections (42) radially against the locking bolts (20), whereby a press fit is formed.

2. Coupling according to claim 1,
**characterized in that**
the blocking portion (21) and the supporting portion (22) of the locking bolts (20) are spaced axially from each other and
**in that** between the blocking portion (21) and the supporting portion (22) an inclined transitional portion (23) is arranged that mediates between the said portions.

3. Coupling according to claim 1 or 2,
**characterized in that**
on the first coupling element (10), in particular on its coupling flange (12), and on the second coupling element (30), in particular on its coupling socket (32), sealing surfaces are arranged in each case that are designed in a matching manner, and
**in that** between the sealing surfaces at least one sealing element (50) is preferably arranged.

4. Coupling according to claim 3,
**characterized in that**
the sealing surfaces are designed in a cone-shaped manner and form an inner cone (16) and an outer cone (36) respectively.

5. Coupling according to any one of claims 1 to 4,
**characterized in that**
in the closed position the blocking section (42) of at least one lock portion and the supporting portion (22) of at least one locking bolt (20) are connected to each other in a force-fitting manner, in particular by way of a clamping connection.

6. Coupling according to any one of claims 1 to 5,
**characterized in that**
the opening section (41) of each lock portion merges continuously into the blocking section (42).

7. Coupling according to any one of claims 1 to 6,
**characterized in that**
at least one locking bolt (20) has a sleeve (24), on which the blocking portion (21), the supporting portion (22) and/or the transitional portion (23) is designed, and
**in that** the sleeve (24) is fixed with a screw bolt (24) on the coupling flange (12).

8. Coupling according to any one of claims 1 to 7,
**characterized in that**
the locking bolts (20), in particular their blocking portions (21), supporting portions (22) and transitional portions (23), and the lock element (40) are formed from a material combination with slidability.

9. Coupling according to any one of claims 1 to 8,
**characterized in that**
on the lock element (40) between the lock portions a projection (46) is arranged in each case, which serves in the open position and/or closed position of the lock element (40) as a stop against the locking bolts (20).

10. Coupling according to claim 9,
**characterized in that**
at least one projection (46) is designed as a lever-shaped handle element (47).

11. Coupling according to any one of claims 1 to 10,
**characterized in that**
the coupling flange (12) has through-holes (13) according to a standardized hole pattern, in particular according to DIN or ANSI,
**in that** the locking bolts (20) are arranged in the through-holes (13) and
**in that** the coupling flange (12) can be fixed by means of the locking bolts (20) on a pipe or hose flange (60).

12. Coupling according to any one of claims 1 to 10,
**characterized in that**
the coupling flange (12) has a threaded connection (14).

13. Coupling according to any one of claims 1 to 12,
**characterized in that**
on the coupling socket (32) a thread (38) is provided.

## Revendications

1. Raccord pour raccorder des tuyauteries rigides ou flexibles, avec un premier élément (10) de raccord et un deuxième élément (30) de raccord, qui peuvent être couplés l'un à l'autre,
dans lequel
sur le premier élément (10) de raccord sont répartis, sur une bride (12) du raccord, une pluralité de boulons de verrouillage (20) qui s'étendent pour l'essentiel parallèlement à un axe longitudinal (7) du raccord (1),
les boulons de verrouillage (20) comportent chacun une zone de blocage (21) distante axialement de la bride (12) du raccord avec un plus court écartement depuis l'axe longitudinal (7) et une partie de soutien (22) qui présente un plus grand écartement depuis l'axe longitudinal (7),
sur le deuxième élément (30) de raccord est placé un élément de verrouillage (40) qui comporte, de manière correspondante aux boulons de verrouillage (20), une pluralité de zones de verrouillage,
chaque zone de verrouillage comporte deux sections, une section d'ouverture (41) présentant un plus court écartement depuis l'axe longitudinal (7) que la zone de blocage (21) du boulon de verrouillage (20) correspondant, et une section de blocage (42) présentant un plus grand écartement depuis l'axe longitudinal (7) que la zone de verrouillage (21) du boulon de verrouillage (20) correspondant,
dans une position d'ouverture, l'élément de verrouillage (40) peut être rapporté axialement sur le premier élément (10) de raccord et peut être amené dans une position de fermeture par une rotation autour de l'axe longitudinal (7), et
dans la position de fermeture, la zone de blocage (42) d'au moins une zone de verrouillage se trouve entre la zone de verrouillage (21) du boulon de verrouillage (20) correspondant et la bride (12) du raccord,
***caractérisé***
***en* ce *que*** chaque zone de verrouillage de l'élément de verrouillage (40) comporte un bord ou une surface périphérique en forme de portion de spirale, et
***en* ce *que****,* dans la position de fermeture, l'élément de verrouillage (40) est bloqué radialement avec les sections de blocage (42) contre les boulons de verrouillage (20), un ajustement pressé étant obtenu.

2. Raccord selon la revendication 1,
***caractérisé***
***en* ce *que*** la zone de blocage (21) et la zone de soutien (22) des boulons de verrouillage (20) sont axialement distantes l'une de l'autre, et
***en* ce qu'**entre la zone de blocage (21) et la zone de soutien (22), se trouve une zone de transition (23) oblique effectuant la jonction entre elles.

3. Raccord selon la revendication 1 ou 2,
***caractérisé***
***en* ce *que*** sur le premier élément (10) de raccord, en particulier sur sa bride (12) de raccord, et sur le deuxième élément (30) de raccord, en particulier sur son embout (32) de raccord, se trouvent respectivement des surfaces d'étanchéité qui sont adaptées les unes aux autres, et
***en* ce qu'**entre les surfaces d'étanchéité se trouve de préférence au moins un élément d'étanchéité (50).

4. Raccord selon la revendication 3,
***caractérisé***
***en* ce *que*** les surfaces d'étanchéité sont réalisées coniques et forment respectivement un cône intérieur (16) et un cône extérieur (36).

5. Raccord selon l'une quelconque des revendications 1 à 4,
***caractérisé***
***en* ce *que****,* dans la position de fermeture, la section de blocage (42) d'au moins une zone de verrouillage et la zone de soutien (22) d'au moins un boulon de verrouillage (20) sont reliées entre elles par adhérence, en particulier par un assemblage coincé.

6. Raccord selon l'une quelconque des revendications 1 à 5,
***caractérisé***
***en* ce *que*** la section d'ouverture (41) de chaque zone de verrouillage se change continûment en la section de blocage (42).

7. Raccord selon l'une quelconque des revendications 1 à 6,
***caractérisé***
***en ce qu*'**au moins un boulon de verrouillage (20) comporte une douille (24) sur laquelle est formée la zone de blocage (21), la zone de soutien (22) et/ou la zone de transition (23), et
*en* ce *que* la douille (24) est fixée sur la bride (12) du raccord avec un boulon fileté (25).

8. Raccord selon l'une quelconque des revendications 1 à 7,
***caractérisé***
***en* ce *que*** les boulons de verrouillage (20), en particulier leurs zones de blocage (21), zones de soutien (22) et/ou zones de transition (23), et l'élément de verrouillage (40) sont constitués d'un appariement de matériaux permettant un glissement.

9. Raccord selon l'une quelconque des revendications 1 à 8,
***caractérisé***
***en* ce *que*** sur l'élément de verrouillage (40) est placé dans chaque cas, entre les zones de verrouillage, une saillie (46) qui sert de butée contre les boulons de verrouillage (20) dans la position d'ouverture et/ou dans la position de fermeture de l'élément de verrouillage (40).

10. Raccord selon la revendication 9,
***caractérisé***
***en* ce qu'**au moins une saillie (46) est conformée en élément de préhension (47) de type levier.

11. Raccord selon l'une quelconque des revendications 1 à 10,
***caractérisé***
***en ce que*** la bride (12) du raccord comporte des ouvertures de passage (13) suivant un motif d'ouvertures normalisé, en particulier suivant DIN ou ANSI,
***en ce que*** les boulons de verrouillage (20) sont placés dans les ouvertures de passage (13), et
***en ce que*** la bride (12) du raccord peut être fixée sur une bride (60) de tuyauterie rigide ou flexible au moyen des boulons de verrouillage (20).

12. Raccord selon l'une quelconque des revendications 1 à 10,
***caractérisé***
***en ce que*** la bride (12) du raccord comporte un raccordement fileté (14).

13. Raccord selon l'une quelconque des revendications 1 à 12,
***caractérisé***
***en ce qu*'**un filetage (38) est prévu sur l'embout de raccord (32).
